# EUROPÄISCHE PATENTANMELDUNG

(11) **EP 4 328 123 A1**
(43) Veröffentlichungstag der Anmeldung: **28.02.2024**
(21) Anmeldenummer: 22191743.8
(22) Anmeldetag: 23.08.2022
(51) Int. Cl.: B62K 3/00, B62K 7/04, B62J 7/02

(54) **ROLLER MIT AUFLAGEELEMENT UND ENTSPRECHENDES VERFAHREN ZUR AUFNAHME VON LASTEN**

(71) Anmelder: Schmidt, Jens, 30657 Hannover (DE)
(72) Erfinder: Schmidt, Jens, 30657 Hannover (DE)
(74) Vertreter: Horak, Michael

(57) **Zusammenfassung**

Die vorliegende Erfindung betrifft ein Auflageelement (2) zur Anbringung an einen Roller, wobei das Auflageelement (2) derart ausgebildet ist, dass es zu einer Seite eines Trittbrettes des Rollers übersteht und dessen Breite erhöht, wodurch eine Last transportiert werden kann.

## Beschreibung

Die vorliegende Erfindung betrifft ein Auflageelement für Roller zum Transport von Lasten sowie entsprechende Roller und ein dazugehöriges Verfahren.

Zur Beförderung von Lasten, wie Einkaufstaschen, Getränkekisten, Koffern und ähnlichen sind aus dem Stand der Technik beispielsweise Lastenfahrräder bekannt, bei denen die Last auf einer vorgelagerten Plattform oder Kiste transportiert werden kann. Darüber hinaus sind natürlich auch diverse Anhänger und Körbe bekannt, die an ein Fahrrad oder Fahrzeug angebracht werden können, wobei der Anbringungsort, d.h. am Heck, seitlich, vorne oder oberhalb des Fahrzeugs, je nach Fahrzeugtyp variieren kann.

Der Nachteil der bisherigen Beförderungsmöglichkeiten ist, dass diese nicht an die zunehmend gebräuchlichen elektrischen oder nichtelektrisch-betriebenen Roller angebracht werden können.

Die Aufgabe der vorliegenden Erfindung ist daher eine Beförderungsmöglichkeit für Roller zur Verfügung zu stellen, die es ermöglicht elektrisch oder nichtelektrischbetriebene Roller als Beförderungsmittel zu nutzen.

Die hiesige Erfindung betrifft daher ein Auflageelement zur Anbringung an einen Roller, wobei das Auflageelement derart ausgebildet ist, dass es zu einer Seite eines Trittbrettes des Rollers übersteht und dessen Breite (B_{Roller}) erhöht. Bei dem Auflageelement handelt es sich vorzugsweise um ein flaches Bauteil, vorzugsweise in Form einer rechteckigen Platte, das auf dem Trittbrett angeordnet und das Trittbrett des Rollers zu einer Seite hin verlängert, wobei das Auflageelement selbst durch mindestens ein Verlängerungselement verlängert werden kann.

Das Auflageelement und/oder das Verlängerungselement umfassen in einer Ausführungsform mindestens ein Loch, ein Lochraster und/oder Langloch, durch welche das Auflageelement mit dem mindestens einen Verlängerungselement und/oder dem Trittbrett des Rollers verbunden werden kann, hierbei können insbesondere lösliche als auch feste Verbindung verwendet werden. Bei den Verbindungen zwischen Auflageelement und Trittbrett des Rollers und/oder Auflageelement und mindestens einem Verlängerungselement handelt es sich vorzugsweise um mindestens eine Steckverbindung, einen Schnellversschluss, eine Schraubverbindung, eine Klebeverbindung, eine Lötverbindung, eine Nietverbindung und/oder eine Verzurrung. Das Auflageelement weist hierbei in einem Aspekt der Erfindung mindestens zwei, bevorzugt sechs, Löcher auf, die derart in dem Auflageelement angeordnet sind, dass diese auf einer Ebene links und rechts des Trittbrettes des Rollers gelegen sind und durch welche vorzugsweise mindestens ein Seil, eine Schnur, ein Band, ein Gurt und/oder ein Gummi gefädelt und unterhalb des Trittbrettes entlang geführt werden kann, sodass das Auflageelement mit dem Trittbrett verbunden werden kann. Das Auflageelement kann ferner an einer Längsseite (L_{Auflage}) ein Winkelprofil aufweisen, durch welches das Auflageelement in das Trittbrett des Rollers eingehakt werden kann, um einen alternativen oder zusätzlichen Halt zwischen Auflageelement und Trittbrett des Rollers zu generieren.

Das Auflageelement und/oder das mindestens eine Verlängerungselement sind vorzugsweise aus Holz, Metall und/oder Kunststoff ausgebildet und können gegen das Verrutschen des Transportgutes eine Antirutschbeschichtung, insbesondere in Form eines Antirutschschlack, mindestens einer Gummimatte und/oder mindestens einer Antirutschbeklebung, umfassen. Die Elemente weisen eine Tragkraft von bis zu 150 kg, vorzugsweise bis zu 100 kg, besonders bevorzugt bis zu 50 kg, auf. Zur Sicherung der Ladung umfasst das Auflageelement und/oder das mindestens einen Verbindungselement ein oder mehrere Sicherungselemente auf, vorzugsweise in Form von Löchern, Haken, Ösen und/oder Zurrschienen.

Die Maße des Auflageelements bzw. des Verlängerungselements sind hierbei wie folgt:
a) das Auflageelement umfasst eine Länge (L_{Auflage}) von 10 cm bis 80 cm, bevorzugt von 30 cm und eine Breite (B_{Auflage}) von 20 cm bis 100 cm, bevorzugt von 20 cm bis 80 cm;
b) das Auflageelement in Verbindung mit mindestens einem Verlängerungselement weist eine Größe von 30 cm x 40 cm (Länge (L) x Breite (B)) und das Verlängerungselement eine Größe von 30 cm x 30 cm (L x B) bis 30 cm x 50 cm (L x B) auf; sowie
c) eine Plattenstärke des Auflageelementes und/oder des mindestens einen Verlängerungselements liegt zwischen 2 mm bis 30 mm.

Abhängig von der Größe des Auflageelements bzw. Auflageelements nebst Verlängerungselement (Beförderungselements) kann unterhalb dieser mindestens ein Stabilisierungselement angeordnet sein, das verhindert, dass sich die Elemente durchbiegen und mit der Last auf dem Boden schleifen. Bei dem mindestens einen Stabilisierungselement handelt es sich vorzugsweise um Rollen und/oder Räder, die bevorzugt einklappbar ausgebildet sind. Das Stabilisierungselement, beispielsweise als Zusatzrolle ausgebildet, dient als Auflager zum direkten Arbeiten der Kräfte auf den Untergrund und Herstellen eines Gleichgewichtes unabhängig vom Gewicht des Benutzers.

Die vorliegende Erfindung betrifft auch einen Roller umfassend ein zuvor beschriebenes Auflageelement mit oder ohne mindestens ein Verlängerungselement. Das Auflageelement ist hierbei vorzugsweise beweglich am Roller bzw. am Trittbrett angeordnet und einklappbar ist. Hierfür wird vorzugsweise mindestens ein Scharnier verwendet.

Darüber hinaus betrifft die vorliegende Erfindung auch ein Verfahren unter Verwendung des Rollers mit einem zuvor beschriebenen Auflageelement, wobei durch das Auflageelement oder das Beförderungselement ein Ungleichgewicht im Hinblick auf den Roller entsteht, welches durch ein Gegengewicht der Körpermasse eines Benutzers ausgeglichen wird, wodurch Lasten befördert werden können.

Diese Aufgabe wird erfindungsgemäß durch das Auflageelement mit den Merkmalen des Patentanspruchs 1, den Roller des Anspruch 11 und durch das Verfahren des Anspruchs 15 gelöst. Vorteilhafte Ausgestaltungen mit zweckmäßigen Weiterbildungen der Erfindung sind in den übrigen Ansprüchen angegeben.

### Abbildungen

- Fig. 1: Schematische Darstellung eines Rollers mit Auflageelement und einer Last.
- Fig. 2: Schematische Darstellung eines Rollers mit Auflageelement und einer Last.
- Fig. 3: Schematische Darstellung des Ausgleichs des Ungleichgewichts durch die Last auf dem Auflageelement mithilfe der Schwungseite eines Benutzers.
- Fig. 4: Schematische Darstellung eines Rollers mit Auflageelement und zusätzlichem Stabilisierungselement in Form eines Zusatzrads für den Schwerlasttransport.
- Fig. 5: Schematische Darstellung des Ausgleichs des Ungleichgewichts durch die Last auf dem Auflageelement mithilfe der Schwungseite eines Benutzers und einem Stabilisierungselement auf Seiten der Auflage bzw. des Verlängerungselements.
- Fig. 6: Schematische Darstellung eines Rollers mit Auflageelement (b) und gemeinsam mit einem Verlängerungselement (a) mit Stabilisierungselement und Verbindungslöchern.
- Fig. 7: Schematische Darstellung eines Rollers mit Auflageelement (b) und gemeinsam mit einem Verlängerungselement (a) mit Stabilisierungselement und Lochraster.
- Fig. 8: Schematische Darstellung eines Rollers mit Auflageelement (b) und gemeinsam mit einem Verlängerungselement (a) mit Stabilisierungselement und Langlöchern.
- Fig. 9: Schematische Darstellung eines Auflageelement (b), eines Verlängerungselements (b) mit Stabilisierungselement und deren Kombination (c).
- Fig. 10: Schematische Darstellung unterschiedlicher Ausführungen eines Auflageelements in Verbindung mit einem Verlängerungselement. (a) Auflageelement als ebene Platte; (b) Auflageelement mit Winkelprofil zum Einhaken an ein Trittbrett; (c) Auflageelement mit breiterem Winkelprofil zum Einhaken an ein Trittbrett.

### Bezugszeichenliste

- 1: Roller
- 2: Auflageelement
- 3: Verlängerungselement
- 4: Loch/Löcher
- 5: Loch zur Verzurrung
- 6: Stabilisierungselement
- 7: Trittbrett
- 8: Winkelprofil
- 9: Schrauben mit komplementären Muttern
- 10: Bremse
- 11: Lenker
- 12: Verbindungsloch zwischen Auflageelement und Verlängerungselement

- B_{Lenker}: Breite des Lenkers
- B_{Auflage}: Breite des Auflageelements
- B_{Roller}: Breite des Rollers

- L_{Roller}: Länge des Rollers
- L_{Auflage}: Länge des Auflageelements mit/ohne Verlängerungselement
- H_{Lenker}: Höhe des Lenkers

### Detaillierte Darstellung der Erfindung

Die vorliegende Erfindung betrifft ein Auflageelement (2) für Roller (1) zum Transport von Lasten sowie entsprechende Roller (1).

Im Folgenden sollen die Artikel "ein" und alle Ableitungen hiervon, wie sie hier verwendet werden, generell als "ein/e/es oder mehrere" verstanden werden, sofern nicht anderweitig angegeben oder aus dem Kontext als Singularform ersichtlich ist.

Sofern die Begriffe "enthält", "hat", "besitzt" und dergleichen in der Beschreibung oder den Ansprüchen verwendet werden, sollen diese Begriffe derart verstanden werden, wie der Begriff "aufweisend" oder "umfassend", d.h. nicht abschließend, außer es ist explizit angegeben.

Der Begriff "Last" oder "Lasten" umfasst grundsätzlich alle möglichen Güter, Ladungen und Waren, wie Werkzeugkoffer, Gepäckstücke, Getränkekisten, Einkäufe, sperrige und/oder betriebliche Güter, wie Fernseher, lange Gegenstände wie Bretter, Surfbretter, Möbel und andere Gegenstände, als auch Post und Pakete.

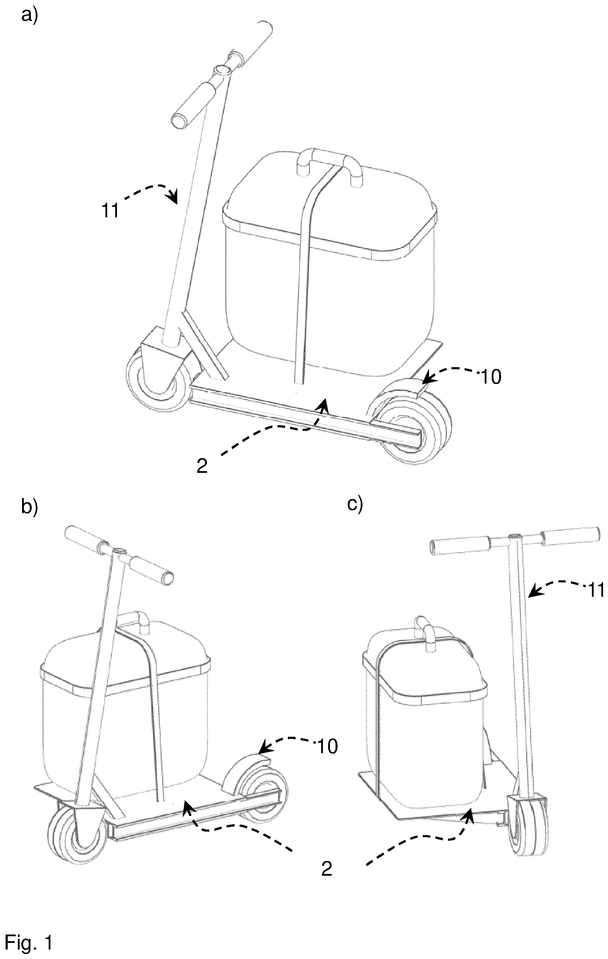

Der Begriff "Roller" (1) wird in der hiesigen Erfindung für nicht-elektrische sowie elektrische Fahrzeuge, insbesondere Tretroller oder auch Scooter, verwendet. Bei Letzteren beiden handelt es sich insbesondere um kleine einspurige Fahrzeuge, die durch muskelbasiertes Treten (Abstoßen) und/oder einen Elektromotor angetrieben werden. Obwohl die üblichen Roller (1) in der Regel aus zwei Rädern bestehen, können auch Roller (1) mit mehr als zwei Rädern vorgesehen sein, bei denen beispielsweise sich zwei Räder im vorderen und/oder hinteren Bereich befinden, um die Stabilität des Rollers (1) zu erhöhen. Der Roller (1) umfasst ein bodennahes Trittbrett (7), welches zwischen den mindestens zwei Rädern angeordnet ist und ermöglicht, dass mindestens eine Person auf diesem stehen kann. Im vorderen Teil des Rollers (1) ist eine Lenkstange, vorzugsweise mit Griffen, vertikal zum Trittbrett (7) angeordnet, die die Lenkung des Rollers (1) ermöglicht. Die Lenkstange kann in einigen Ausführungen klappbar sein und/oder aus mehreren ineinander schiebbaren Rohrstücken gebildet sein, sodass der Roller (1) auf eine kleinere Größe zusammengefaltet werden kann und/oder der Lenker (11) höhenverstellbar ist. Die Rohrelemente können mittels Schnellverschlüssen, Einrastelementen oder ähnlichen justiert werden. Das Trittbrett (7) kann mit der Lenkstange direkt oder mittels Verbindungselementen verbunden sein, wobei bei der Verwendung von Verbindungselementen im vorderen Teil zwischen Trittbrett (7) und Lenkstange diese auch einen Faltmechanismus umfassen können, der es ermöglicht die Lenkstange zum Trittbrett (7) zu führen, sodass der Roller (1) eine annährend flache Form erhält und leichter transportiert werden kann. In einigen Ausführungsformen kann auch vorgesehen sein, dass ein Sitz im hinteren Bereich des Trittbretts (7) vorgesehen ist, auf dem eine Person Platz nehmen kann. Ferner kann an dem Roller (1) mindestens eine Beleuchtung, Klingel sowie Bremse (10) vorgesehen sein. Insbesondere bei elektrisch betriebenen Rollern (1) sind vorzugsweise zwei unabhängig voneinander funktionierende Bremsen (10) vorgesehen, wobei eine der Bremsen (10) vorne und eine hinten angeordnet ist. Bei nicht-elektrisch betriebenen Rollern (1) kann auch eine Kotflügelbremse (10) oberhalb des mindestens einen hinteren Rades des Rollers vorgesehen sein, welche durch Herunterdrücken das Hinterrad berührt und eine Reibung bewirkt, wodurch eine Bremswirkung generiert wird, wie beispielsweise der Fig. 1 zu entnehmen ist. Der Roller (1) kann grundsätzlich aus jedem beliebigen stabilen Material gefertigt sein, dies ist insbesondere Holz, Kunststoff und/oder Metall, wie Aluminium und Stahl.

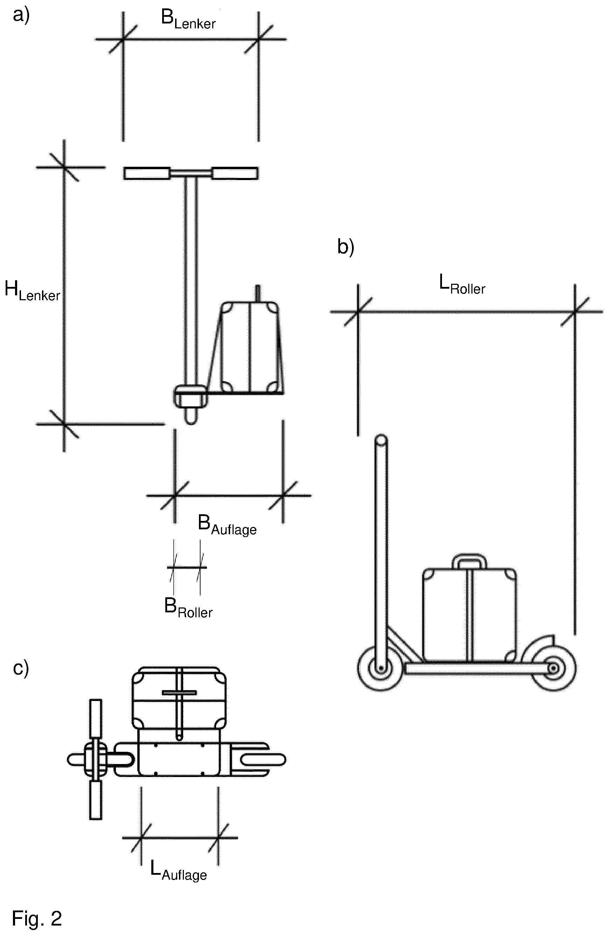

Wie der Fig. 1 zu entnehmen ist umfasst der hiesige Roller (1) erfindungsgemäß zusätzlich ein flaches, ebenes Bauteil, vorzugsweise in Form einer rechteckigen Platte, die an dem Trittbrett (7) angeordnet ist und zu einer Seite des Rollers (1) übersteht. Die Platte kann jedoch grundsätzlich auch jede beliebige Form aufweisen. Dieses flache Bauteil wird im Folgenden als "Auflageelement" (2) beschrieben. Normalerweise weisen Roller (1) ein fußbreites Trittbrett (7) auf, welches einen sicheren Stand mindestens eines Fußes ermöglicht. Bei E-Tretrollern ist das Trittbrett in einigen Fällen breiter, sodass beide Füße einer Person nebeneinander auf diesem Platz finden. Wie der Fig. 2 zu entnehmen ist, wird das Trittbrett (7) des Rollers (1) durch das Auflageelement (2) zu einer Seite hin verlängert, sodass zumindest im Leerzustand des Rollers (1) ein Ungleichgewicht zu einer Seite hergestellt wird. Das Auflageelement (2) ist vorzugsweise je nach Benutzer links oder rechts zum Trittbrett (7) angeordnet.

Beim üblichen nichtelektrischen Rollern steht der Benutzer auf einem Standbein und lehnt sich nach außen, um Schwung mit dem anderen Bein zu holen, wobei dadurch statisch gesehen das Kräfteverhältnis nicht im Gleichgewicht ist. Geht man vereinfacht davon aus, dass die aufstehende Körperhälfte ca. 50% der Körpermasse beträgt und die Schwungseite ebenfalls, so entsteht in Bezug auf das Trittbrett (7) des Rollers (1) ein außermittig auszugleichendes Gegengewicht von ca. einer halben Körpermasse. Folglich würde einem Gewicht von beispielsweise 70 kg eine Zuladung von 35 kg für das Erreichen des Gleichgewichts notwendig sein. Präliminäre Versuche zeigen jedoch, dass für eine bequeme Fahrt mit Auflageelement (2), letzteres mit Last ein Gewicht von 25% der Körpermasse des Benutzers haben sollte. Mit zusätzlichem Gewicht auf Seiten des Auflageelements (2), beispielsweise durch ein oder mehrere Verlängerungselemente (3) oder eine Last, hat sich mindestens ein Stabilisierungselement (6) in Form eines Rades oder Rollen bewährt, dass das Ungleichgewicht behebt und die Fahrt stabilisiert.

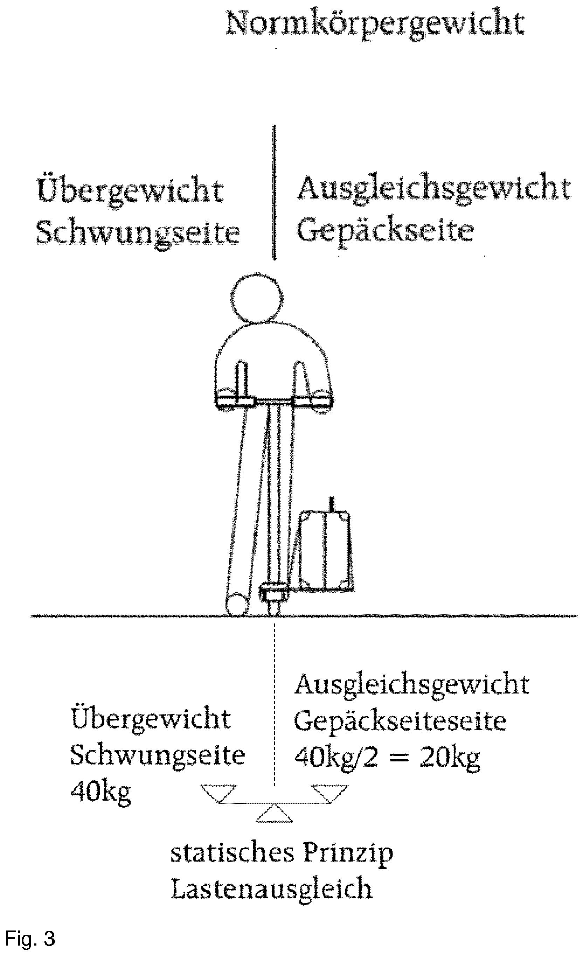

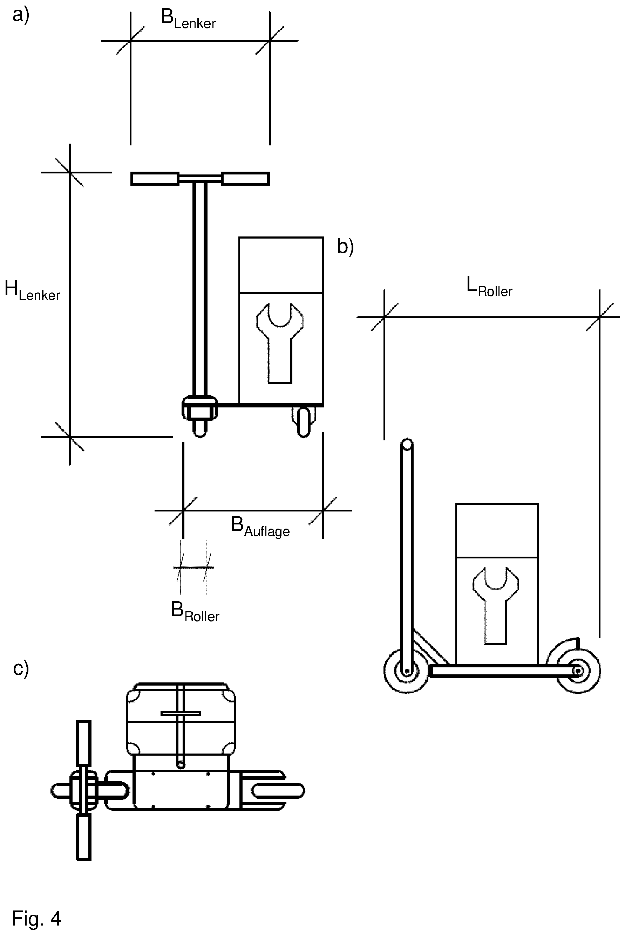

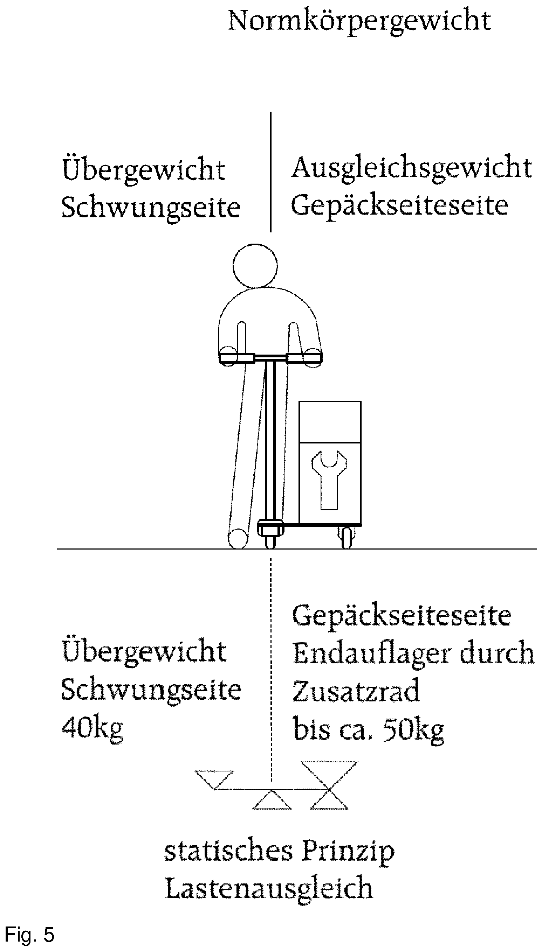

Durch die außermittige Schwungbewegung des Benutzers wird somit das Ungleichgewicht kompensiert, welches durch das Auflageelement (2) gebildet wurde, wie der Fig. 3 zu entnehmen ist. Das Auflageelement (2) kann zudem als Abstellfläche für Lasten verwendet werden. Durch welches mittels Roller (1) ein einfaches Abstellen und transportieren des Guts ermöglicht wird. Mithilfe mindestens eines zusätzlichen Stabilisierungselements beispielsweise in Form eines Rads oder einer Rolle, kann nicht nur das Gewicht der Last erhöht werden, die transportiert wird, sondern auch die Länge des Auflageelements (2) und/oder des Verlängerungselements (3) vergrößert werden, wie den Fig. 4 und 5 zu entnehmen ist.

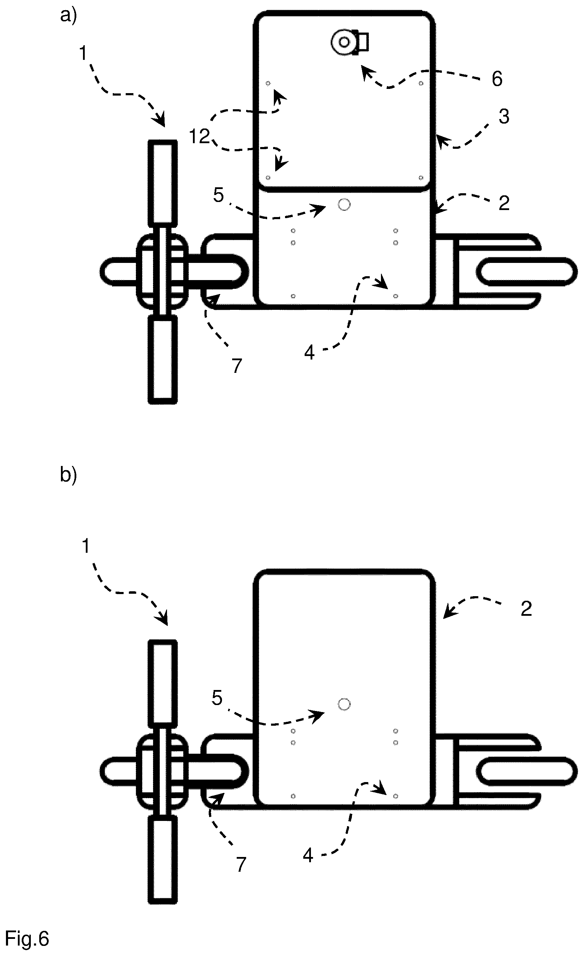

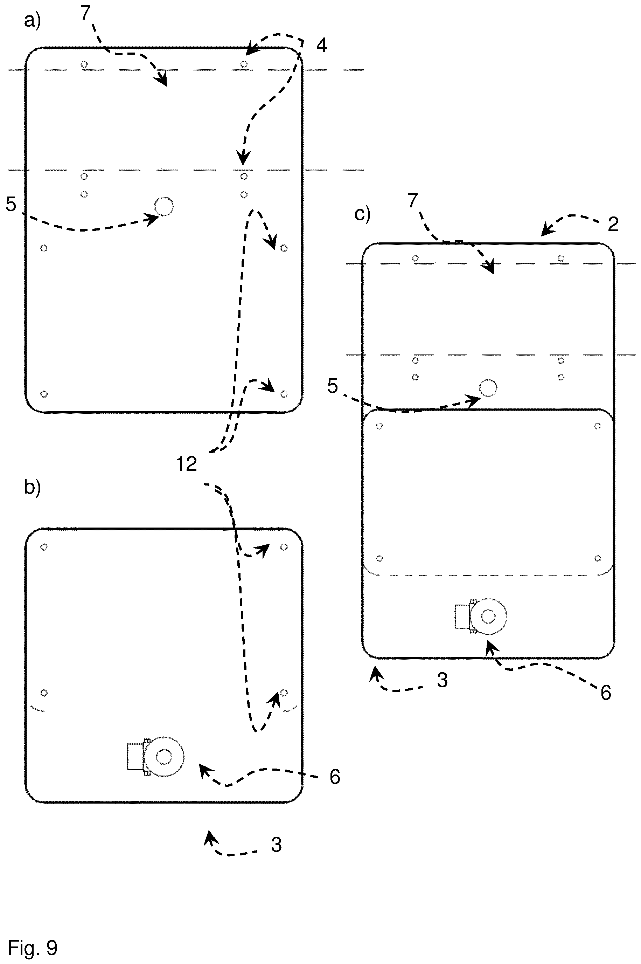

In den Fig. 6-10 ist dargestellt, dass das Auflageelement (2) in einer Ausführungsform auch mehrere Verlängerungselemente (3) umfassen oder aus mehreren Elementen, sogenannten Verlängerungselementen (3), bestehen kann, wie beispielsweise zwei Platten, die miteinander verbunden werden können oder fest verbunden sind.

Das Auflageelement (2) sowie das Verlängerungselement (3) sind vorzugsweise aus biegesteifen Materialen ausgebildet, wie Holz, Metall und/oder PVC. Im Falle das das Auflageelement (2) fest am Roller (1) angeordnet ist und gegebenenfalls eine Lagerung draußen vorgesehen, finden besonders bevorzugt witterungsbeständige Materialen wie Metall und/oder Kunststoff Anwendung. Zusätzlich kann auf dem Auflageelement (2) und/oder dem mindestens ein Verlängerungselement (3) eine Antirutschbeschichtung angeordnet sein. Diese soll neben der besseren Standfestigkeit des Fahrers auch ein Verrutschen der Ladung vermindern. Bei der Antirutschbeschichtung kann es sich beispielsweise um einen Antirutschschlack, eine Gummimatte und/oder Antirutschbeklebung handeln. Jedoch sollen die Möglichkeiten nicht durch die vorherige Auflistung begrenzt sein, es kann sich auch um andere bekannte antirutsch Materialen oder Beschichtungen handeln.

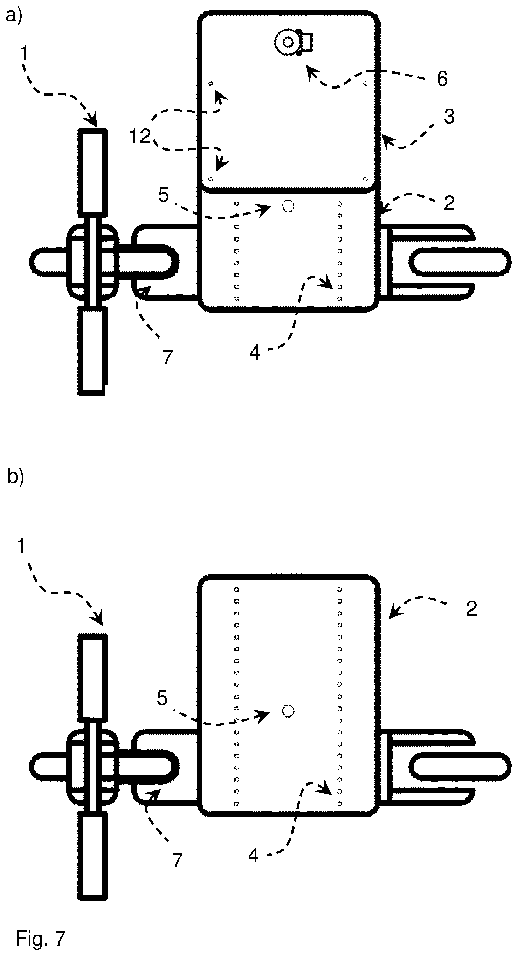

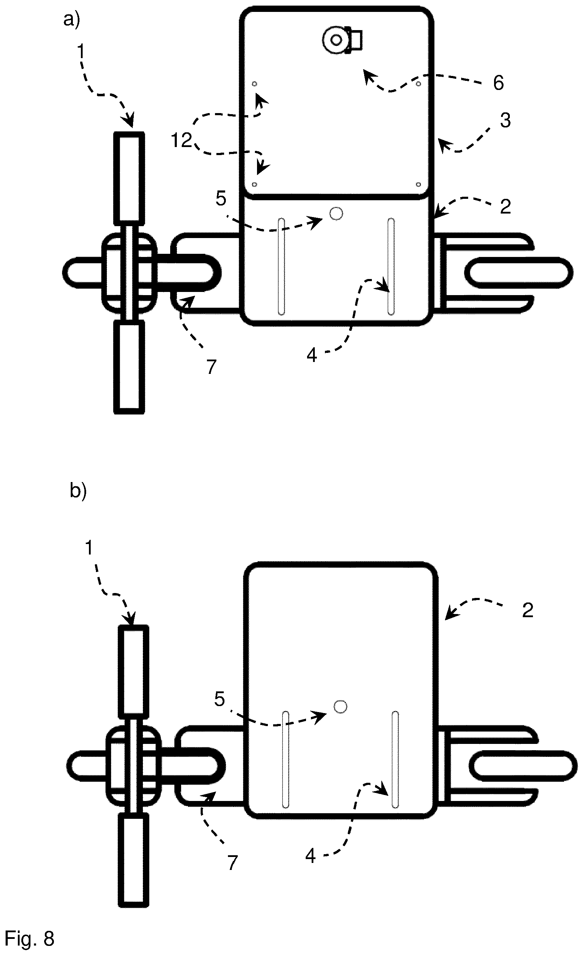

In einem weiteren Aspekt der Erfindung umfasst das Auflageelement (2) mindestens ein Loch (4, 12) (Fig. 6), ein Lochraster (Fig. 7) und/oder Langloch (Fig. 8), mithilfe welcher das Auflageelement (2) mit dem mindestens einen Verlängerungselement (3) verbunden werden kann, das Auflageelement (2) am Roller (1) befestigt werden kann und/oder zur Sicherung der Ladung auf dem Verlängerungselement (3) und/oder dem Auflageelement (2) beitragen kann.

Wie den Fig. 6-10 zu entnehmen ist, ist das Auflageelement (2) in einer bevorzugten Ausführungsform derart ausgebildet, dass dieses alleine oder mit einem zusätzlichen Verlängerungselement (3) verwendet werden kann, sodass bei einfacher Montage vorzugsweise kleinere Lasten und Güter bis zu 50 kg, vorzugsweise 15 kg transportiert werden können oder nach Anbringung des mindestens einen weiteren Verlängerungselements (3) an das Auflageelement (2) Lasten von vorzugsweise bis zu 150 kg, besonders bevorzugt von 50 kg, transportiert werden können. Hierfür ist das Auflageelement (2), das am Roller (1) befestigt ist oder befestigt wird, vorzugsweise derart ausgebildet, dass es auf der überstehenden Seite oder Transportseite mindestens ein, besonders bevorzugt vier Löcher (12) aufweist, die es erlauben das Verlängerungselement (3) mit dem Auflageelement (2) zu verbinden. Als bevorzugte Verbindungen werden Schrauben mit zugehörigen Muttern (9) verwendet, die durch die Löcher (12) des Auflageelements (2) und des Verlängerungselements (3) geführt werden und beide miteinander verbinden. Jedoch können auch andere im Stand der Technik bekannten Verbindungen, wie Steckverbindungen, Schnellverschlüsse oder andere Verbindungsarten verwendet werden, die eine lösliche Verbindung der mindestens zwei Teile erlauben. Versuche zeigten, dass bei der Verwendung von vier im Rechteck angeordneten Schrauben, die in gesenkte Löcher (12) eines Durchmessers vom 6,5 mm, welche im Randbereich des Auflageelements (2) und/oder des Verlängerungselements (3) angeordnet sind, eine stabile Befestigung hervorbrachten und eine sichere Transportmöglichkeit boten.

Neben den Verbindungslöchern (12) der Elemente, Auflageelement (2) und Verlängerungselement (3), zueinander, weist das Auflageelement (2), dass an dem Trittbrett (7) des Rollers (1) angeordnet ist, darüber hinaus vorzugsweise mindestens zwei, besonders bevorzugt sechs Löcher (4) auf, die eine Verbindung des Auflageelements (2) mit dem Trittbrett (7) des Rollers (1) ermöglichen. Hierfür sind die mindestens zwei Löcher (4), wie beispielsweise der Fig. 4 zu entnehmen ist, bevorzugt derart am Auflageelement (2) angeordnet, dass diese auf einer Ebene links und rechts des Trittbrettes (7) gelegen sind, sodass ein Seil, Schnur, Band, Gummi oder ähnliches durch diese gefädelt und unterhalb des Trittbrettes (7) entlang geführt werden kann, sodass das Auflageelement (2) mit dem Trittbrett (7) verbunden wird. Insbesondere sind die Löcher (4) in einem Abstand von größer der Breite des Rollers (B_{Roller}) zueinander angeordnet (in Bezug auf die Breite). Aufgrund der variierenden Breiten der Trittbretter (7) der verschiedenen Rollertypen, sind vorzugsweise mehrere Löcher (4) für unterschiedliche breite Trittbretter (7) vorgesehen, sodass das Auflageelement (2) an unterschiedliche Roller (1) befestigt werden kann.

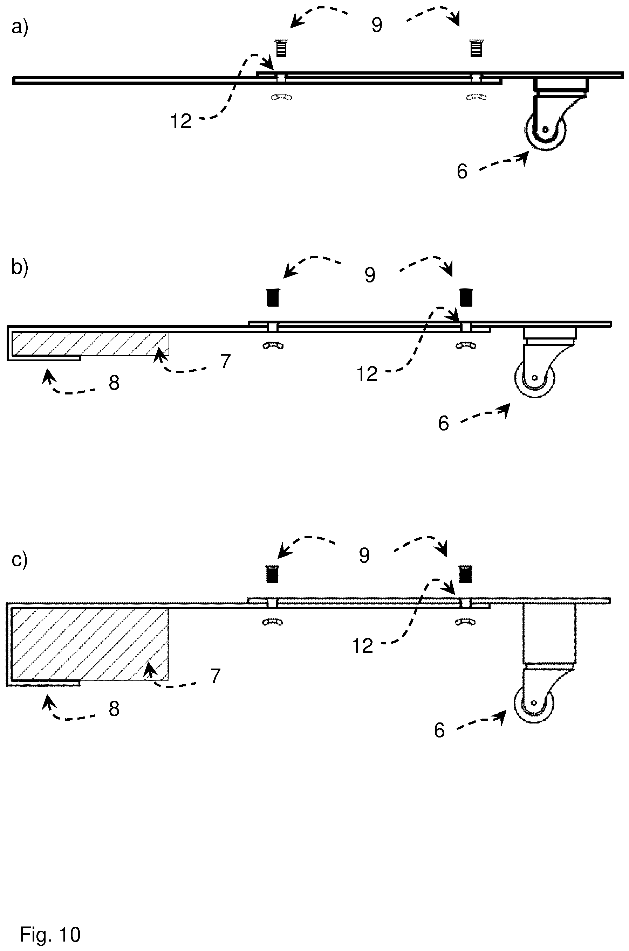

Neben der Verzurrung des Auflageelementes (2) an das Trittbrett (7) des Rollers (1) kann in einer alternativen oder zusätzlichen Ausführungsform das Auflageelement (2) mit dem den Roller (1), insbesondere das Trittbrett (7), vorzugsweise kraftschlüssig verbinden, beispielsweise angeschweißt, angenietet und/oder verklebt sein, sodass eine nicht-lösbare Verbindung zwischen den beiden Teilen entsteht. Ferner kann das Auflageelement (2) jedoch in einer besonders bevorzugten Ausführungsform auch an das Trittbrett (7) des Rollers (1) eingehackt, geklemmt und/oder geschraubt sein, sodass eine lösbare kraftschlüssige Verbindung zwischen den beiden entsteht. Wie der Fig. 10 zu entnehmen ist, wird in einem Aspekt der Erfindung das Auflageelement (2) am Rand des Trittbrettes (7) eingehackt, darüber hinaus kann es zusätzlich verschraubt und/oder festgezurrt werden, um eine höhere Stabilität der Befestigung zu erreichen. Aus diesem Grund weist das Auflageelement (2) in einer besonders bevorzugten Ausführung im nicht überstehenden Bereich des Auflageelementes (2), welcher mit dem Trittbrett (7) in Verbindung gebracht wird, ein Winkelprofil (8) auf, welches ermöglicht, dass das Trittbrett (7) in dieses eingeführt wird.

Der Vorteil der löslichen Verbindung zwischen Roller (1) und Auflageelement (2) ist, dass Letzteres an jedem beliebigen Roller (1) schnell und einfach angeordnet werden kann sowie bei Schäden einfach austauschbar ist.

Neben den Löchern (4, 12) für die Befestigung des Auflageelement (2) zum Roller (1) bzw. der Elemente zueinander sind in einem Aspekt der Erfindung auch ein oder mehrere Sicherungselemente in dem Auflageelement (2) und/oder dem mindestens einen Verbindungselement vorgesehen. Hierbei kann es sich beispielsweise um Löcher (5) handeln, die zur Verzurrung der Güter oder Lasten dienen sollen. Alternativ oder zusätzlich zu den Löchern zur Verzurrung (5) können auch Haken, Ösen und/oder Zurrschienen, Gurte, die vorzugsweise einklappbar sind, auf dem Auflageelement (2) und/oder dem mindestens einen Verlängerungselement (3) vorgesehen sein.

Das Auflageelement (2) ist vorzugsweise derart gestaltet, dass an die gängigen nichtelektrischen und elektrischen Roller (1) angeordnet werden kann. Hierfür weist das Auflageelement (2) Länge (L) von 10 cm bis 80 cm, besonders bevorzugt von 30 cm auf, sowie eine Breite (B) von 20 cm bis 100 cm, besonders bevorzugt von 20 cm bis 80 cm. Wird ein Auflageelement (2) mit einem Verlängerungselement (3) verwendet, weist das Auflageelement (2) vorzugsweise eine Größe von 30 cm x 40 cm (L x B) und das Verlängerungsbrett eine Größe von 30 cm x 30 cm (L x B) bis 30 cm x 50 cm (L x B) auf. Je größer das Auflageelement (2) ist oder die Kombination von Auflageelement (2) und Verlängerungselement (3) kann mindestens ein Stabilisierungselement (6) in Form einer Lastenrolle, Rolle, und/oder eines Rades unterhalb des Auflageelementes (2) und/oder des Verlängerungselements (3) vorgesehen sein, um die Stabilität zu erhöhen und einen sicheren Transport von Lasten und Gütern zu ermöglichen, wie den Fig. 6-10 zu entnehmen ist. Die Stabilisierungselemente (6) in Form der Lastenrollen, Rollen und/oder Rädern sind hierbei vorzugsweise derart unterhalb des Auflageelementes (2) und/oder des Verlängerungselements (3) angeordnet, dass diese nur bei Bedarf verwendet werden, d.h. dass diese klappbar an der Unterseite angeordnet sind.

Versuche zeigten, dass die Plattenstärke des Auflageelementes (2) bzw. des Verlängerungselements (3) im Bereich von 2 mm bis 30 mm liegen sollte, wobei eine 4 mm starke Metallplatte, vorzugsweise aus Stahl oder Aluminium sich für den Transport von schwereren Lasten als optimal herausgestellt hat. Jedoch kann bei Verwendung von Metall auch eine geringere Stärke oder bei Kunststoff eine höhere Stärke Anwendung finden. In Abhängigkeit von der Größe des Auflageelementes (2), der Verlängerungselemente (3), der Plattenstärke, Material und/oder der Stabilisierungselemente (6) kann eine Tragkraft von bis zu 150 kg, bevorzugt von bis zu 100 kg, besonders bevorzugt von bis zu 50 kg erreicht werden.

In einem weiteren Aspekt bei dem das Auflagebrett fest mit dem Trittbrett (7) bzw. dem Roller (1) verbunden ist, kann vorzugsweise vorgesehen sein, dass das Auflagebrett beweglich am Roller (1) angeordnet ist, beispielsweise mithilfe eines Scharniers, sodass der Platzbedarf beim Parken der Roller (1) vermindert wird.

Da das Auflageelement (2) als auch das Auflageelement (2) mit Verlängerung derart ausgebildet sind, dass diese an Trittbretter (7) beliebiger nichtelektrischer und elektrischer Roller (1) löslich angebracht werden können, betrifft die vorliegende Erfindung auch ein Auflageelement (2) alleine sowie ein Beförderungselement umfassend Auflageelement (2) und Verlängerungselement (3), insbesondere für den Transport von Lasten und Gütern. Das Auflageelement (2), ist derart ausgebildet, dass es am Trittbrett (7) des Rollers (1) angeordnet werden kann, dass der Schwerpunkt dieses zu einer Seite gerichtet ist. Das Auflageelement kann hierbei die Ausführungsformen aufweisen, wie bereits zuvor zum Roller (1) mit Auflageelement (2) beschrieben, mit der Ausnahme, dass eine nicht-lösliche Verbindung zwischen Trittbrett (7) und Auflageelement (2) hier ausgeschlossen ist.

Obwohl das Auflageelement (2) bzw. das Verlängerungselement (3) als plattenförmig beschrieben werden, können diese ein oder mehrere Ränder auf der Abstellfläche aufweisen, damit Lasten besser transportiert werden können. Darüber hinaus können die Elemente (2, 3) auch als Korb ausgebildet sein. Alternativ kann in einem Aspekt vorgesehen sein, dass einsprechende Zusatzeinheiten, wie Körbe, Begrenzungen, Bügel, Gitter oder ähnliche Einheiten auf das Auflageelement und/oder das mindestens eine Verlängerungselement (3) aufgebracht werden können oder aufgebracht sind.

Mithilfe der vorliegenden Erfindung lassen sich Güter und Lasten schneller und leichter transportieren, ohne dass anderweitige Fahrzeuge, wie Autos oder ähnliche verwendet werden müssen. Folglich können auch körperlich weniger starke Personen, das Auflageelement (2) mit oder ohne Verlängerungselemente (3) nutzen, um private sowie betrieblich Transporte damit durchzuführen. Insbesondere sind die platzsparenden Roller (1) auch geeignet, um Lasten oder Güter in Innenstädten, Betrieben, privaten Hausfluren, Messegeländen und/oder Kellerräumen zu transportieren, d.h. an Orten an denen größere Lastenroller, Autos oder ähnliche Fahrzeuge nicht oder nicht ohne erheblichen Aufwand verwendet werden können. Darüber hinaus ist die Verwendung der Roller (1) mit Auflageelement (2) oder dem Auflageelement (2) an bestehenden Rollern (1) sehr umweltfreundlich, da der Transport von Getränkekisten oder anderen Einkäufen mit diesen einfach und schnell erledigt werden kann, ohne dass auf Fahrzeuge mit fossilen Brennstoffen zurückgegriffen werden muss. Jedoch können die Roller (1) mit Auflageelement (2) auch als Ergänzung zum Auto angesehen werden, da sie in den Kofferraum passen und somit auch Ziele mit Last erreicht werden können, die nicht mit dem Auto angefahren werden können oder dürfen. Einsatzgebiet wären beispielsweise Anlieferung in Fußgängerzonen, Strandurlaub, Zeltplätze, wo das Verbringen des Gepäcks bislang eine körperlich schwere Angelegenheit war/ist. Jedoch sind die Einsatzgebiete nicht beschränkt auf die vorherige Auflistung. Bei unwegsamem Gelände können insbesondere auch luftbereifte Roller und/oder Stabilisierungselemente (6) vorgesehen sein.

Obwohl vorgesehen ist ein Auflageelement (2), ein Beförderungselement und/oder ein Verlängerungselement (3) auf den Markt zu bringen, die an bereits vorhandene Roller (1) angebracht werden können, ist ferner vorgesehen einen Roller (1) zur Verfügung zu stellen, der ein entsprechendes Auflageelement (2) oder Beförderungselement umfasst. Diese sollen vorzugsweise an zentralen Punkten zur Verfügung gestellt werden, wie beispielsweise am Flughafen, auf Messegeländen, Bahnstationen, in Innenstädten, jedoch nicht beschränkt auf die vorherige Auflistung.

Der Nachteil der bisherigen Mietssysteme für elektrische Roller (1) ist, dass diese keine zentralen Sammelstellen haben, wodurch die Roller (1) überall herumstehen, und dadurch Wege blockieren. Ferner ist das Aufladen dieser schwierig, da die Roller (1) teilweise täglich durch die Anbieter eingesammelt werden müssen, um diese zu Laden. Neben dem unaufgeräumten Stadtbild stellen die verstreuten Roller (1) eine Beeinträchtigung der Verkehrssicherung dar und sind durch die Abholung mit Fahrzeugen auch umwelttechnisch nicht von Vorteil.

Daher betrifft die vorliegende Erfindung auch eine Station in der die Roller (1) mit Auflageelementen (2) ordentlich und sicher verstaut werden können, wobei die Roller (1) vorzugsweise, ähnlich wie Einkaufswagen, zusammengeschoben werden können. Darüber hinaus ist ein Sicherungs- und Pfandsystem vorgesehen, welches beispielsweise durch Sperrketten, die durch ein Münzsystem, App-basierte Freigabe oder ähnliches, die Freigabe des Rollers (1) erlaubt. Darüber hinaus ist in einem Aspekt vorgesehen, dass die Abgabe der Roller (1) nur möglich ist, wenn diese wieder an das Sicherungssystem gekoppelt wurden. Mithilfe dieser Technik wird erreicht, dass die Roller (1) nicht überall verstreut herumliegen, jedoch jeder bei Bedarf sich einen Roller (1) nehmen und sein Vorhaben umsetzen kann.

Diese und andere Ausführungsformen der vorliegenden Erfindung werden in der Beschreibung und den Beispielen offenbart und sind durch diese umfasst. Weitere Literatur über bekannte Materialien, Verfahren und Anwendungen die in Übereinstimmung mit der vorliegenden Erfindung verwendet werden können, können aus öffentlichen Bibliotheken und Datenbanken, beispielsweise unter Verwendung elektronischer Geräte aufgerufen werden. Ein vollständigeres Verständnis der Erfindung kann durch Bezugnahme auf die Figuren erhalten werden, die zum Zweck der Illustration bereitgestellt wurden und den Umfang der Erfindung nicht beschränken sollen.

## Patentansprüche

1. Auflageelement zur Anbringung an einen Roller (1), wobei das Auflageelement (2) derart ausgebildet ist, dass es zu einer Seite eines Trittbrettes (7) des Rollers (1) übersteht und die Breite (B_{Roller}) erhöht.

2. Auflageelement nach Anspruch 1, wobei es sich bei dem Auflageelement (2) um ein flaches Bauteil, vorzugsweise in Form einer rechteckigen Platte, handelt das mit dem Trittbrett (7) verbindbar ist und das Trittbrett (7) des Rollers zu einer Seite hin verlängert und ferner durch mindestens ein Verlängerungselement (3) selbst verlängerbar ist.

3. Auflageelement nach Anspruch 1 oder 2, wobei das Auflageelement (2) und/oder das mindestens eine Verlängerungselement (3) mindestens ein Loch (4, 12), ein Lochraster und/oder Langloch, umfassen, mithilfe welcher das Auflageelement (2) mit dem mindestens einen Verlängerungselement (3) verbunden, das Auflageelement (2) am Roller (1) befestigt und/oder die Last gesichert wird.

4. Auflageelement nach einem der Ansprüche 1 bis 3, wobei das mindestens eine Verlängerungselement (3) an das Auflageelement (2) mithilfe einer löslichen oder festen Verbindung befestigt wird., vorzugsweise wobei es sich bei der Verbindung zwischen Auflageelement (2) und Trittbrett (7) des Rollers und/oder Auflageelement (2) und mindestens einem Verlängerungselement (3) um mindestens eine Steckverbindung, einen Schnellversschluss, eine Schraubverbindung, eine Klebeverbindung, eine Lötverbindung, eine Nietverbindung und/oder eine Verzurrung handelt.

5. Auflageelement nach einem der Ansprüche 1 bis 4, wobei mindestens zwei, bevorzugt sechs, Löcher (4) derart in dem Auflageelement (2) angeordnet sind, dass diese auf einer Ebene links und rechts des Trittbrettes (7) des Rollers (1) gelegen sind, sodass ein Verbindungselement, vorzugsweise ein Seil, eine Schnur, ein Band, ein Gurt und/oder ein Gummi, durch diese gefädelt und unterhalb des Trittbrettes (7) entlang geführt werden kann, sodass das Auflageelement (2) mit dem Trittbrett (7) verbindbar ist.

6. Auflageelement nach einem der Ansprüche 1 bis 5, wobei das Auflageelement (2) und/oder das Verlängerungselement (3)
a) aus Holz, Metall und/oder Kunststoff ausgebildet sind;
b) Tragkraft von bis zu 150 kg, vorzugsweise bis zu 100 kg, besonders bevorzugt bis zu 50 kg, aufweist; und/oder
c) die Plattenstärke des Auflageelementes (2) und/oder des mindestens einen Verlängerungselements (3) zwischen 2 mm bis 30 mm liegt.

7. Auflageelement nach einem der Ansprüche 1 bis 6, wobei das Auflageelement (2) und/oder das Verlängerungselement (3) eine Antirutschbeschichtung, vorzugsweise in Form eines Antirutschschlack, mindestens einer Gummimatte und/oder Antirutschbeklebung, umfassen.

8. Auflageelement nach einem der Ansprüche 1 bis 7, wobei das Auflageelement (2) und/oder das Verlängerungselement (3) ein oder mehrere Sicherungselemente umfassen, vorzugsweise in Form von Löchern, Haken, Ösen und/oder Zurrschienen.

9. Auflageelement nach einem der Ansprüche 1 bis 8, wobei das Auflageelement (2) an einer Längsseite (L_{Auflage}) ein Winkelprofil (8) aufweist, durch welches das Trittbrett (7) des Rollers (1) in das Auflageelement (2) eingehakt werden kann.

10. Auflageelement nach einem der Ansprüche 1 bis 9, wobei
a) das Auflageelement (2) eine Länge (L_{Auflage}) von 10 cm bis 50 cm, bevorzugt von 30 cm und eine Breite (B_{Auflage}) von 20 cm bis 100 cm, bevorzugt von 40 cm bis 90 cm; und/oder
b) das Auflageelement (2) in Verbindung mit mindestens einem Verlängerungselement (3) eine Größe von 30 cm x 40 cm (Länge (L)x Breite (B)) und das Verlängerungselement (3) eine Größe von 30 cm x 30 cm (L x B) bis 30 cm x 50 cm (L x B);

11. Auflageelement nach einem der Ansprüche 1 bis 10, wobei unterhalb des Auflageelements (2) und/oder des mindestens einen Verlängerungselements (3) mindestens ein Stabilisierungselement (6) angeordnet ist, wobei es sich bei dem Stabilisierungselement (6) vorzugsweise um Rollen und/oder Rädern handelt, die besonders bevorzugt einklappbar ausgebildet sind.

12. Roller umfassend ein Auflageelement (2) nach einem der Ansprüche 1 bis 11.

13. Roller nach Anspruch 12, wobei das Auflageelement (2) beweglich am Trittbrett (7) des Rollers (1) angeordnet ist, vorzugsweise mithilfe eines Scharniers.

14. Station für Roller mit einem Auflageelement (2) nach einem der Ansprüche 12 oder 13 wobei die Roller (1) zusammengeschoben und mithilfe mindestens eines Sicherungs- und Pfandsystems freigegeben und/oder abgegeben werden.

15. Verfahren unter Verwendung eines Auflageelements nach einem der Ansprüche 1 bis 11 oder eines Rollers nach Anspruch 12 oder 13, wobei durch das Auflageelement (2) ein Ungleichgewicht im Hinblick auf einen Roller (1) entsteht, welches durch ein Gegengewicht in Form von Körpermasse eines Benutzers ausgeglichen wird.
